# EUROPÄISCHE PATENTSCHRIFT

(11) **EP 3 792 215 B1**
(45) Veröffentlichungstag und Bekanntmachung des Hinweises auf die Patenterteilung: **06.10.2021**
(21) Anmeldenummer: 19196864.3
(22) Anmeldetag: 12.09.2019
(51) Int. Cl.: B67D 1/08, B67D 3/00

(54) **ENTNAHMESYSTEM**
RETRIEVAL SYSTEM
SYSTÈME DE PRÉLÈVEMENT

(43) Veröffentlichungstag der Anmeldung: 17.03.2021
(73) Patentinhaber: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(56) Entgegenhaltungen:
- WO-A1-2012/113070
- CN-Y- 2 439 411
- US-A1- 2011 000 250

## Beschreibung

Die Erfindung betrifft ein Entnahmesystem gemäß dem Oberbegriff des Anspruchs 1.

Derartige Entnahmesysteme umfassen Flaschen, in welchen Flüssigkeiten wie Chemikalien gelagert sind, sowie Entnahmeköpfe, die auf den Öffnungen der Flaschen befestigt werden können, wobei die Entnahmeköpfe hierfür geeignete Verschlussmittel aufweisen. Derartige Flaschen werden beispielsweise in Laboren eingesetzt.

Bei bekannten Entnahmesystemen dieser Art ist der Entnahmekopf in Form eines einfachen Deckels ausgebildet, und in welchen ein Schlauch gesteckt und in den Innenraum der zugeordneten Flasche geführt wird. Der Schlauch wird dann an eine Pumpe angeschlossen, um Flüssigkeit aus dem Behälter abzupumpen. Sobald die Flasche geleert wird, wird der Schlauch aus dem Deckel herausgezogen und gegebenenfalls für die Entnahme von Flüssigkeit aus einer weiteren Flasche verwendet.

Auch kann der Schlauch während eines Wechsels durch den Deckel hindurchgeführt werden. Der Deckel wird dann mit dem durchgeführten Schlauch an eine neue Flasche angeschlossen.

Ein erster Nachteil eines derartigen Entnahmesystems besteht darin, dass die Bohrung im Deckel, durch welche der Schlauch geführt ist, keinen dichten Abschluss bildet. Daher können dort Dämpfe der in der Flasche gelagerten Flüssigkeit austreten, was insbesondere dann kritisch ist, wenn in der Flasche giftige Chemikalien gelagert sind.

Ein weiterer Nachteil besteht darin, dass der aus der leeren Flasche herausgezogene Schlauch die Flüssigkeit in der nächsten Flasche, in die er eingeführt wird, kontaminiert, da an diesem noch Flüssigkeitsreste der Flüssigkeit in der ersten Flasche anhaften.

Weiterhin ist nachteilig, dass ein Benutzer, der den Schlauch aus der Flasche herauszieht, der anhaftenden Flüssigkeit ausgesetzt ist.

Aus der EP 2 848 583 B1 ist ein Entnahmesystem bekannt, bei welchem ein Entnahmekopf mit einem Tauchrohr in einer Behälteröffnung eines Behälters befestigt werden kann. Über das Tauchrohr kann Flüssigkeit aus dem Behälter entnommen werden.

Ein Entnahmesystem gemäß dem einleitenden Teil des Anspruchs 1 ist aus der US 2011/000250 A1 bekannt.

Derartige mit Tauchrohren arbeitenden Entnahmesysteme können nur für größere Behälter wie Fässer eingesetzt werden, nicht jedoch zur Entnahme von Flüssigkeiten aus Flaschen. Ein Einsatz von Tauchrohren für Flaschen würde größere bauliche Änderungen erforderlich machen, welche die jeweilige Transportzulassung beeinträchtigen würden.

Der Erfindung liegt die Aufgabe zugrunde, ein Entnahmesystem der eingangs genannten Art so auszubilden, dass dieses bei einfachem konstruktivem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Entnahmesystem mit einem auf eine Öffnung einer Flasche aufsetzbaren Entnahmekopf, wobei der Entnahmekopf ein Verschlussmittel zum Verschließen der Öffnung der Flasche aufweist. Im Entnahmekopf ist ein Schlauch so gelagert, dass bei auf der Öffnung aufgesetztem Entnahmekopf der Schlauch in die Flasche ragt und Flüssigkeit aus der Flasche über den Schlauch entnehmbar ist. Ein Betätigungsmechanismus ist vorgesehen, mittels dessen die Lagerung des Schlauches im Entnahmekopf lösbar ist.

Bei dem erfindungsgemäßen Entnahmesystem wird der Entnahmekopf mit einem an diesem befestigten Schlauch auf eine Öffnung einer eine Flüssigkeit enthaltenden Flasche aufgesetzt und mit den Verschlussmitteln an der Öffnung befestigt.

Ein erster wesentlicher Vorteil des erfindungsgemäßen Entnahmesystems besteht darin, dass der Entnahmekopf mit dem daran befestigten Schlauch eine hermetisch dichte Einheit bildet, sodass dann, wenn der Entnahmekopf mit den Verschlussmitteln auf der Öffnung der Flasche befestigt ist und nachfolgend Flüssigkeit aus der Flasche entnommen wird, keine Dämpfe aus der Flasche austreten können. Dies ist insbesondere dann vorteilhaft, wenn in der Flasche giftige Chemikalien gelagert sind. Auch wird verhindert, dass Kontaminationen in der Außenluft in die Flasche gelangen können.

Ein weiterer wesentlicher Vorteil des erfindungsgemäßen Entnahmesystems besteht darin, dass der Entnahmekopf mit dem daran befestigten Schlauch als gebrauchsfertige Baueinheit auf der Öffnung der Flasche befestigt werden kann. Über den in die Flasche ragenden Schlauch kann dann unmittelbar Flüssigkeit aus der Flasche entnommen werden, wobei hierzu der Entnahmekopf vorteilhaft an eine Pumpe angeschlossen wird, mittels derer Flüssigkeit aus der Flasche abgesaugt wird.

Ein wesentlicher Aspekt der Erfindung besteht darin, dass der Schlauch lösbar und damit austauschbar an dem Entnahmekopf gelagert ist. Zum Lösen und auch Fixieren des Schlauches am Entnahmekopf ist erfindungsgemäß ein Betätigungsmechanismus am Entnahmekopf vorgesehen.

Wurde auf eine Flasche ein Entnahmekopf aufgesetzt und aus diesem die dort enthaltene Flüssigkeit über den Schlauch entnommen, so wird der Betätigungsmechanismus am Entnahmekopf betätigt, wodurch der Schlauch am Entnahmekopf gelöst wird. Der Schlauch fällt dann in den leeren Behälter und wird als Wegwerfteil entsorgt.

Wird der Entnahmekopf für das Leeren einer weiteren Flasche eingesetzt, so wird durch einfaches Betätigen des Betätigungsmechanismus ein neuer Schlauch am Entnahmekopf fixiert. Dadurch wird wieder eine gebrauchsfertige Baueinheit erhalten, die auf der Öffnung der weiteren Flasche fixiert wird, sodass aus dieser Flasche Flüssigkeit entnommen werden kann.

Ein wesentlicher Vorteil des erfindungsgemäßen Entnahmesystems besteht somit darin, dass mit dem Schlauch als am Entnahmekopf lösbar befestigtes Wegwerfteil Kontaminationen bei einer Mehrfachverwendung des Entnahmekopfes auf einfache Weise vermieden werden können. Der am Entnahmekopf befestigte Schlauch wird nur einmalig zum Entleeren einer Flasche verwendet und dann durch Betätigen des Betätigungsmechanismus am Entnahmekopf in dieser Flasche belassen. Dadurch wird vermieden, dass mit diesem Schlauch die Flüssigkeit in der nächsten zu entleerenden Flasche kontaminiert wird, da für diese ein neuer Schlauch am Entnahmekopf befestigt wird. Damit wird ein kontaminierungsfreies Verfahren zum Entleeren von Flaschen bereitgestellt. Die auswechselbaren Schläuche sind äußerst kostengünstig, wobei diese insbesondere aus Kunststoffteilen bestehen. Die Verwendung separater Schläuche zum Entleeren der Flaschen führt daher zu keiner nennenswerten Erhöhung der Herstellkosten des Entnahmesystems.

Gemäß einer vorteilhaften Ausgestaltung der Erfindung weist der Entnahmekopf Verriegelungsmittel auf, welche in einer Verriegelungsposition den Schlauch im Entnahmekopf fixieren. Mittels des Betätigungsmechanismus sind die Verriegelungsmittel in eine Löseposition überführbar, in welcher diese den Schlauch freigeben.

Die Verriegelungsmittel stellen mechanische Einheiten dar, die durch die Betätigung des Betätigungsmechanismus von der Verriegelungsposition in die Löseposition oder umgekehrt überführt werden können.

Besonders vorteilhaft ist der Betätigungsmechanismus eine rein mechanische Einheit, mit dem Betätigungsbewegungen generiert werden, die direkt auf die Verriegelungsmittel umgesetzt werden können.

Damit wird ein konstruktiv einfacher Verriegelungs- und Entriegelungsmechanismus für den Schlauch geschaffen.

Gemäß einer konstruktiv vorteilhaften Ausgestaltung der Erfindung sind die Verriegelungsmittel von Kugeln gebildet, die in Bohrungen eines Führungskanals verschiebbar gelagert sind. In dem Führungskanal ist der Schlauch führbar. In der Verriegelungsposition sind die Kugeln mit einer Anpresskraft gegen den Schlauch gedrückt, wodurch der Schlauch lagefixiert ist. In der Löseposition sind die Kugeln vom Schlauch gelöst.

Diese Verriegelungsmittel sind konstruktiv einfach ausgeführt und gewährleisten eine sichere Verriegelung und Entriegelung des Schlauchs.

Besonders vorteilhaft sind in dem Führungskanal in Umfangsrichtung äquidistant angeordnete, in radialer Richtung verlaufende Bohrungen vorgesehen, wobei in jeder Bohrung eine Kugel geführt ist. Die Bohrungen und Kugeln sind jeweils identisch ausgebildet und in einer senkrecht zur Längsachse des Führungskanals verlaufenden Ebene orientiert.

Da die Kugeln zum Verriegeln des Schlauchs in den Bohrungen in radialer Richtung und damit direkt auf den Schlauch zubewegt werden, ergibt eine gute Kraftübertragung von den Kugeln auf den Schlauch und somit eine sichere Verriegelung.

Durch die identische Ausbildung der Bohrungen, den Kugeln und deren drehsymmetrischen Anordnung im Führungskanal und damit relativ zum Schlauch, ergibt sich eine allseitig gleiche Kraftübertragung auf den Schlauch, wodurch eine besonders effiziente, sichere Verriegelung erzielt wird.

Weiter vorteilhaft ist jede Bohrung an ihrer Ausmündung in den Führungskanal auf einen Durchmesser, der kleiner als der Durchmesser der im Führungskanal geführten Kugeln ist, verengt.

Dadurch wird auf einfache Weise ein Herausfallen der Kugeln aus den Bohrungen verhindert, wenn der Schlauch aus dem Führungskanal herausgelöst wurde und der Führungskanal somit leer ist.

Gemäß einer vorteilhaften Ausgestaltung der Erfindung ist der Führungskanal relativ zum Verschlussmittel bewegbar.

Generell kann der Führungskanal Bestandteil eines gegenüber dem Verschlussmittel beweglichen Kopfteils sein.

Bei dieser Ausführungsform drücken in einer Sperrstellung des Verschlussmittels relativ zum Führungskanal Stellmittel am Verschlussmittel die Verriegelungsmittel in den Bohrungen gegen den Schlauch und fixieren diesen im Führungskanal. In einer Freigabestellung des Verschlussmittels sind relativ zum Führungskanal die Stellmittel außer Eingriff mit den Verriegelungsmitteln, sodass der Schlauch aus dem Führungskanal gelöst ist.

Die Stellmittel sind bevorzugt am Verschlussmittel angeordnet. Beispielsweise können als Stellmittel Vorsprünge, Rastschultern oder Rastnasen vorgesehen sein, die insbesondere Bestandteil des Verschlussmittels sein können und einstückig mit diesem ausgebildet sein können. Derartige Stellmittel weisen einen besonders einfachen Aufbau auf. Weiterhin wird mit diesen eine besonders einfache und direkte Ankopplung des Betätigungsmechanismus an die Verriegelungsmittel realisiert.

Generell werden die Stellmittel durch den Betätigungsmechanismus gesteuert. Dies erfolgt besonders einfach derart, dass dann wenn der Betätigungsmechanismus nicht durch einen Benutzer betätigt ist, die Stellmittel in der Sperrstellung des Verschlussmittels für eine Fixierung des Schlauchs sorgen. Durch ein Betätigen des Betätigungsmechanismus sind die Stellmittel außer Eingriff mit den Verriegelungsmitteln gebracht.

Gemäß einer ersten Variante der Erfindung ist der Betätigungsmechanismus ein Federmechanismus. In diesem Fall ist das Kopfteil durch die Federkraft einer Feder in der Sperrstellung relativ zum Verschlussmittel gehalten. Das Überführen in die Freigabestellung erfolgt durch Andrücken des Kopfteils auf das Verschlussmittel gegen die Federkraft der Feder.

Das Funktionsprinzip dieser Variante des Entnahmesystems ist somit derart, dass die Federkraft der Feder für eine Fixierung des Schlauchs am Entnahmekopf sorgt. Zum Lösen des Schlauchs muss ein Benutzer den Betätigungsmechanismus betätigen, indem er das Kopfteil gegen das Verschlussmittel drückt. Ebenso kann auf diese Weise ein neuer Schlauch am Entnahmekopf fixiert werden.

Gemäß einer zweiten Variante der Erfindung bildet das Verschlussmittel den Betätigungsmechanismus aus. Insbesondere in diesem Fall ist das Verschlussmittel in Form eines Schraubverschlusses ausgebildet.

In diesem Fall wird bei Lösen des Schraubverschlusses dieser nach oben gedrückt und gibt dabei die Kugeln oder allgemein die Verriegelungsmittel frei.

Auch bei dieser Variante ist der Schlauch bei nicht betätigtem Betätigungsmechanismus am Entnahmekopf fixiert. Nur bei aktivem Betätigen des Betätigungsmechanismus durch einen Benutzer wird der Schlauch vom Entnahmekopf gelöst.

In diesem Fall ist das Verschlussmittel so ausgebildet, dass bei Öffnen des Verschlussmittels, wenn der Entnahmekopf von der Flasche abgenommen wird, durch diese Öffnungsbewegung der Schlauch im Führungskanal gelöst wird.

Bei einem Verschlussmittel in Form eines Schraubverschlusses ist dessen Gewinde so ausgebildet, dass bei Aufschrauben des Schraubverschlusses dieser eine Relativbewegung gegenüber dem Führungskanal ausführt und dabei das Stellmittel aus der Sperrstellung in die Freigabestellung überführt. Dies kann beispielsweise durch einen Mitnehmer am Gewinde und/oder durch eine spezielle Ausbildung des Gewindes als Teilgewinde realisiert werden.

Die Erfindung wird im Folgenden anhand der Zeichnungen erläutert. Es zeigen:
- Figur 1:: Schematische Darstellung des erfindungsgemäßen Entnahmesystems.
- Figur 2:: Entnahmekopf des Entnahmesystems gemäß Figur 1 mit darin verriegeltem Schlauch.
- Figur 3:: Entnahmekopf des Entnahmesystems gemäß Figur 1 mit darin angeordnetem, entriegeltem Schlauch.
- Figur 4:: Entnahmekopf des Entnahmesystems gemäß Figur 1 mit aus dem Entnahmekopf herausfallendem Schlauch.

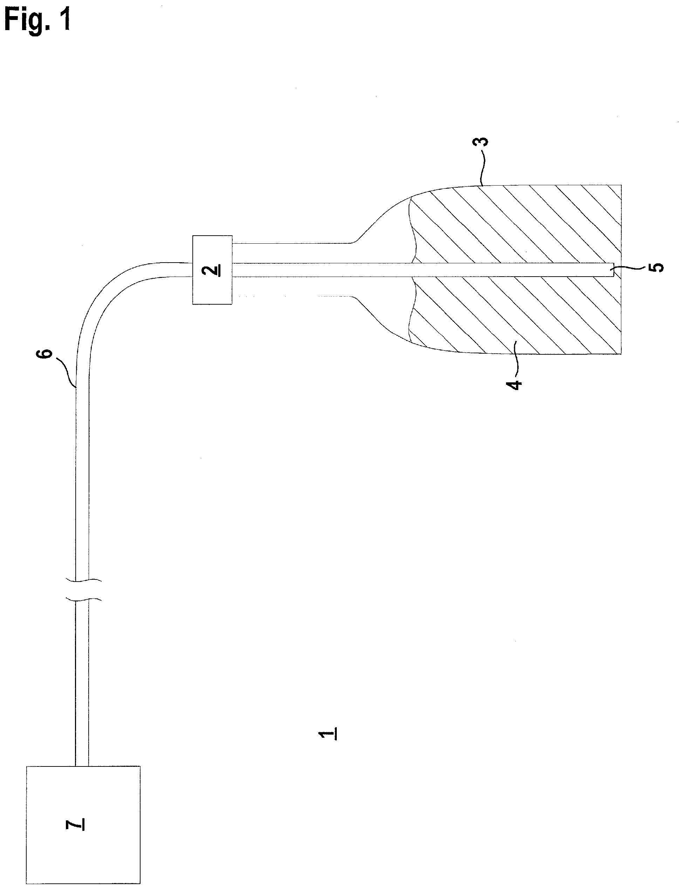

Figur 1 zeigt schematisch ein Ausführungsbeispiel des erfindungsgemäßen Entnahmesystems 1.

Das Entnahmesystem 1 umfasst einen Entnahmekopf 2, der auf eine Öffnung einer Flasche 3 aufsetzbar ist, die eine Flüssigkeit 4 enthält. Am Entnahmekopf 2 ist ein Schlauch 5 gelagert, der vom Entnahmekopf 2 in den Innenraum der Flasche 3 geführt ist.

Der Entnahmekopf 2 ist weiterhin über eine Leitung 6 an eine Pumpe 7 angeschlossen. Mittels der Pumpe 7 wird Flüssigkeit 4 aus der Flasche 3 abgepumpt. Die Flüssigkeit 4 wird über den Schlauch 5 aus der Flasche 3 ausgeführt und dann der Leitung 6 zugeführt.

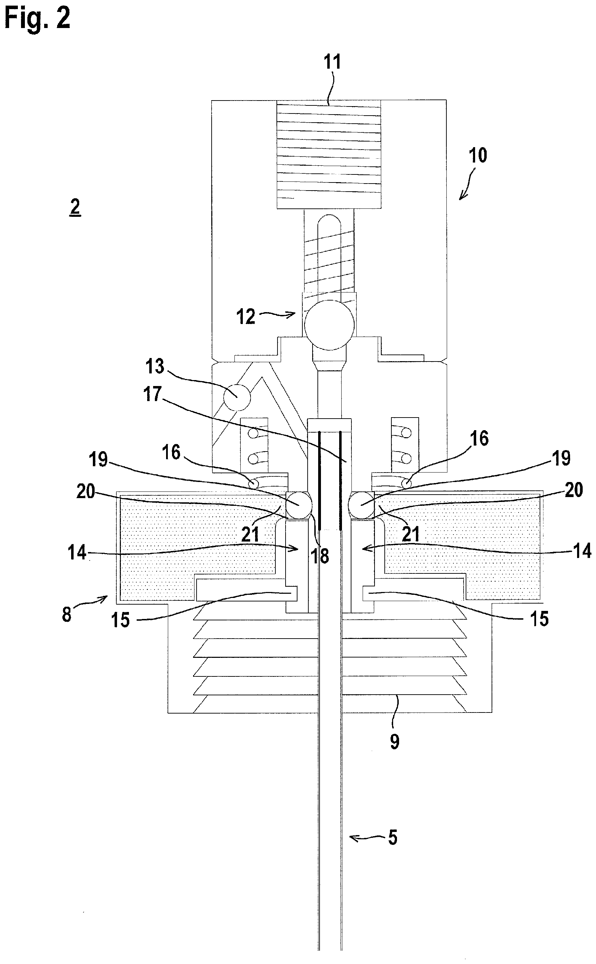

Die Figuren 2 - 4 zeigen ein Ausführungsbeispiel des erfindungsgemäßen Entnahmekopfes 2. Der Entnahmekopf 2 weist ein Verschlussmittel 8 in Form eines Schraubverschlusses auf, mit dem der Entnahmekopf 2 auf der Öffnung einer Flasche 3 fixiert werden kann. Der Schraubverschluss weist ein Innengewinde 9 auf, das auf ein Gewinde an der Öffnung der Flasche 3 aufgeschraubt werden kann. Mit dem Schraubverschluss des Entnahmekopfes 2 erfolgt ein dichter Abschluss der Öffnung der Flasche 3.

Der Entnahmekopf 2 weist weiterhin ein Kopfteil 10 auf. Am oberen Ende des Kopfteils 10 ist ein Anschluss 11 vorgesehen, an welchen die zur Pumpe 7 führende Leitung 6 angeschlossen werden kann. Der Anschluss 11 ist mit einem Rückschlagventil 12 gesichert. Das Rückschlagventil 12 verhindert, dass Flüssigkeit aus der Leitung 6 austritt. Weiterhin ist im Kopfteil 10 ein Kugelventil 13 vorgesehen, mittels dessen ein Luft- und Druckausgleich in der Flasche 3 bewirkt wird.

An der Unterseite des Kopfteils 10 mündet ein Führungskanal 14 aus, der in eine zentrale Aussparung im Verschlussmittel 8 ragt, wobei das untere Ende des Führungskanals 14 mit Befestigungsmitteln 15 im Verschlussmittel 8 gesichert ist. Der Führungskanal 14 ist hohlzylindrisch ausgebildet.

Das Kopfteil 10 ist gegenüber dem das Verschlussmittel 8 bildenden Schraubverschluss beweglich, wodurch ein Betätigungsmechanismus gebildet wird.

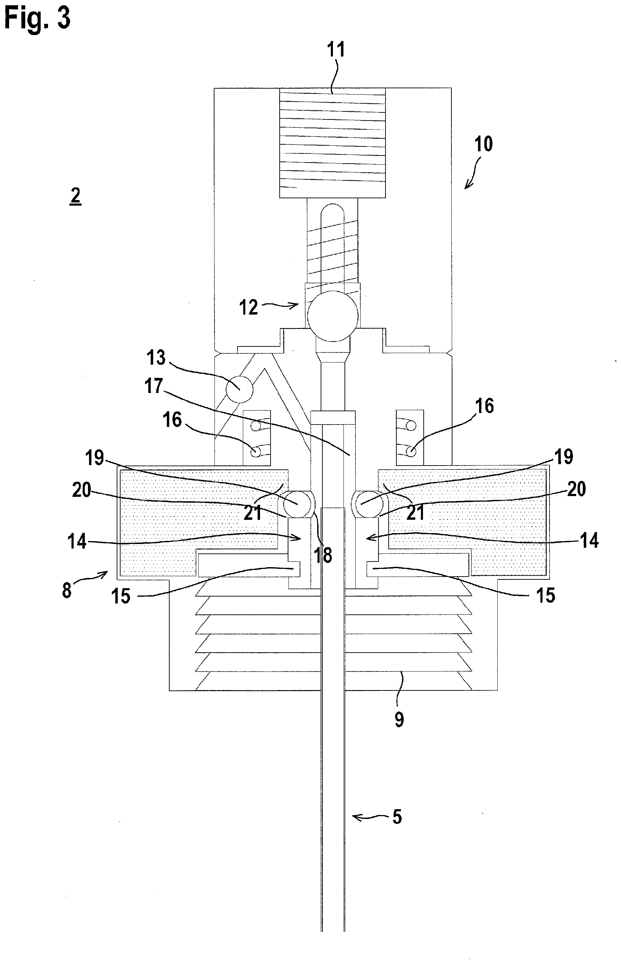

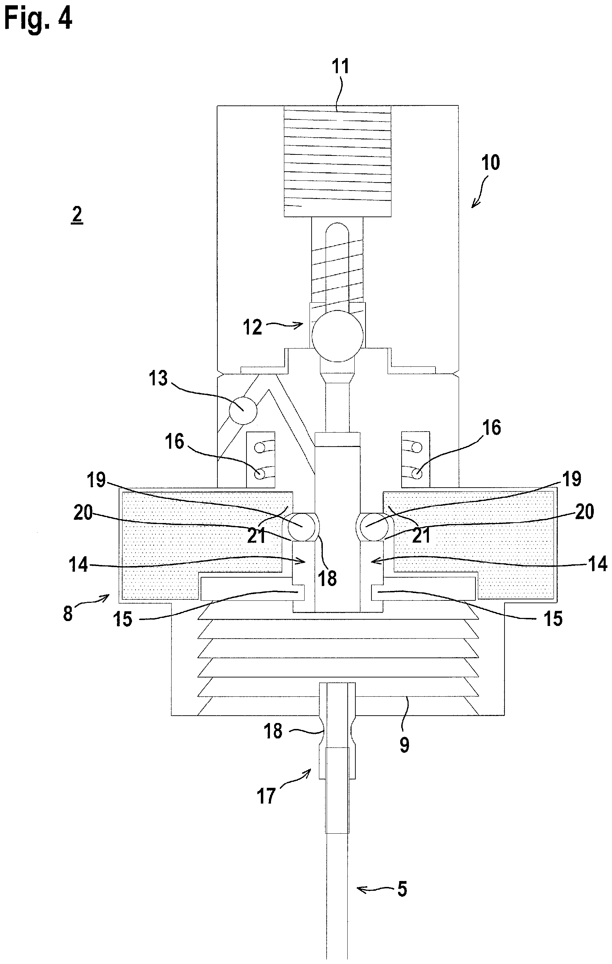

Zwischen dem Kopfteil 10 und dem Schraubverschluss ist eine Feder 16 angeordnet. Durch die Federkraft der Feder 16 wird das Kopfteil 10 auf Abstand zur Oberseite des Verschlussmittels 8 gehalten (Figur 2). Betätigt ein Benutzer den so gebildeten Betätigungsmechanismus, so drückt er hierzu auf das obere Ende des Kopfteils 10 und drückt dies nach unten, bis die Unterseite des Kopfteils 10 auf der Oberseite des Verschlussmittels 8 aufliegt (Figur 3 und 4).

Figur 2 zeigt den Entnahmekopf 2 bei nicht betätigtem Betätigungsmechanismus. Der Schlauch 5 ist im Innenraum des Führungskanals 14 gelagert und dort mit Verriegelungsmitteln lagegesichert.

Wie aus den Figuren 2 - 4 ersichtlich ist das obere, in den Führungskanal 14 einführbare Ende des Schlauchs 5 mit einer Manschette 17 versehen, die eine in Umfangsrichtung umlaufende Nut 18 aufweist.

Die Verriegelungsmittel sind von Kugeln 19 gebildet, die in Bohrungen 20 im Führungskanal 14 geführt sind. Im vorliegenden Fall sind in einer Ebene senkrecht zur Längsachse des Führungskanals 14 vier identische Bohrungen 20 vorgesehen, die jeweils um 90° in Umfangsrichtung zueinander versetzt angeordnet sind. Die Bohrungen 20 verlaufen in radialer Richtung im Führungskanal 14. In jeder Bohrung 20 ist eine Kugel 19 geführt, wobei alle Kugeln 19 identisch ausgebildet sind. Die Kugeln 19 sind mit geringem Spiel in den jeweiligen Bohrungen 20 geführt.

Die Durchmesser der Bohrungen 20 sind im Bereich der Einmündung in den Führungskanal 14 etwas verjüngt, das heißt etwas kleiner als der Kugeldurchmesser, sodass ein Herausfallen der Kugeln 19 in den leeren Führungskanal 14 verhindert wird.

Wie aus den Figuren 2 - 4 ersichtlich, ist am oberen Rand des die Aussparung begrenzenden Wandelements des Verschlussmittels 8 ein Vorsprung 21 vorgesehen, der in Umfangsrichtung umläuft und eine Verengung der Aussparung, in welche der Führungskanal 14 ragt, darstellt. Dieser Vorsprung 21 bildet ein Stellmittel, wobei Figur 2 das Verschlussmittel 8 und das Stellmittel in einer Sperrstellung zeigt. Diese Sperrstellung wird eingenommen, wenn der Betätigungsmechanismus nicht betätigt ist und die Feder 16 das Kopfteil 10 auf Abstand zum Verschlussmittel 8 hält. Der das Stellmittel bildende Vorsprung 21 liegt dann, wie Figur 2 zeigt, im Bereich der Bohrungen 20. Der Vorsprung 21 drückt damit die Kugeln 19 in den Bohrungen 20 in Richtung Innenraum des Führungskanals 14, sodass die Kugeln 19 in einer Verriegelungsposition mit einer Anpresskraft gegen die Nut 18 in der Manschette 17 des Schlauches 5 gedrückt sind, wodurch der Schlauch 5 im Führungskanal 14 fixiert ist.

Wird der Betätigungsmechanismus, wie in Figur 3 dargestellt betätigt, wird das Kopfteil 10 gegen den das Verschlussmittel 8 bildenden Schraubverschluss gedrückt und der Führungskanal 14 wird weiter in die Aussparung des Schraubverschlusses hineingeschoben. Damit wird das Verschlussmittel 8 und mit diesem der Vorsprung 21 von der Sperrstellung in eine Freigabestellung überführt. In dieser Freigabestellung liegt der Vorsprung 21 oberhalb der Bohrungen 20. Die Kugeln 19 sind somit in Löseposition und werden somit nicht mehr mittels des Vorsprungs 21 gegen den Schlauch 5 gepresst, das heißt der Schlauch 5 ist im Führungskanal 14 nicht mehr festgehalten. Aufgrund der Schwerkraft fällt damit der Schlauch 5 aus dem Führungskanal 14 (Figur 4) und fällt in die Flasche 3.

Zum Entleeren der Flasche 3 wird der Entnahmekopf 2 auf der Flasche 3 befestigt. Der Betätigungsmechanismus ist nicht betätigt und der Schlauch 5 ist fest im Führungskanal 14 gehalten (Figur 2). Die Flasche 3 wird dann mittels der Pumpe 7 entleert. Sobald die Flasche 3 leer ist, wird der Betätigungsmechanismus betätigt und der Schlauch 5 im Führungskanal 14 freigegeben (Figur 3), sodass der Schlauch 5 in die leere Flasche 3 fällt und entsorgt werden kann.

Soll der Entnahmekopf 2 zur Entnahme von Flüssigkeit 4 aus einer weiteren Flasche 3 verwendet werden, wird zunächst ein neuer Schlauch 5 im Führungskanal 14 des Entnahmekopfes 2 befestigt. Hierzu betätigt ein Benutzer den Betätigungsmechanismus und schiebt dann den Schlauch 5 in den Führungskanal 14. Dann lässt der Benutzer das Kopfteil 10 los, sodass das Kopfteil 10 durch die Federkraft der Feder 16 vom Verschlussmittel 8 abgehoben wird. Damit wird das Verschlussmittel 8 mit dessen Vorsprung 21 in die Sperrstellung überführt, wodurch der Schlauch 5 im Führungskanal 14 festgehalten wird.

Die so gebildete Baueinheit kann dann für eine Entnahme von Flüssigkeit 4 auf die weitere Flasche 3 aufgesetzt werden.

### Bezugszeichenliste

- (1): Entnahmesystem
- (2): Entnahmekopf
- (3): Flasche
- (4): Flüssigkeit
- (5): Schlauch
- (6): Leitung
- (7): Pumpe
- (8): Verschlussmittel
- (9): Innengewinde
- (10): Kopfteil
- (11): Anschluss
- (12): Rückschlagventil
- (13): Kugelventil
- (14): Führungskanal
- (15): Befestigungsmittel
- (16): Feder
- (17): Manschette
- (18): Nut
- (19): Kugel
- (20): Bohrung
- (21): Vorsprung

## Patentansprüche

1. Entnahmesystem (1) mit einem auf eine Öffnung einer Flasche (3) aufsetzbaren Entnahmekopf (2), wobei der Entnahmekopf (2) ein Verschlussmittel zum Verschließen der Öffnung der Flasche (3) aufweist, wobei im Entnahmekopf (2) ein Schlauch (5) so gelagert ist, dass bei auf der Öffnung aufgesetztem Entnahmekopf (2) der Schlauch (5) in die Flasche (3) ragt und Flüssigkeit (4) aus der Flasche (3) über den Schlauch (5) entnehmbar ist, **dadurch gekennzeichnet, dass** ein Betätigungsmechanismus vorgesehen ist, mittels dessen die Lagerung des Schlauches (5) im Entnahmekopf (2) lösbar ist.

2. Entnahmesystem (1) nach Anspruch 1, **dadurch gekennzeichnet, dass** der Entnahmekopf (2) Verriegelungsmittel aufweist, welche in einer Verriegelungsposition den Schlauch (5) im Entnahmekopf (2) fixieren.

3. Entnahmesystem (1) nach Anspruch 2, **dadurch gekennzeichnet, dass** mittels des Betätigungsmechanismus die Verriegelungsmittel in eine Löseposition überführbar sind, in welcher diese den Schlauch (5) freigeben.

4. Entnahmesystem (1) nach Anspruch 3, **dadurch gekennzeichnet, dass** die Verriegelungsmittel von Kugeln (19) gebildet sind, die in Bohrungen (20) eines Führungskanals (14) verschiebbar gelagert sind, wobei in dem Führungskanal (14) der Schlauch (5) führbar ist.

5. Entnahmesystem (1) nach Anspruch 4, **dadurch gekennzeichnet, dass** in der Verriegelungsposition die Kugeln (19) mit einer Anpresskraft gegen den Schlauch (5) gedrückt sind, wodurch der Schlauch (5) lagefixiert ist, und dass in der Löseposition die Kugeln (19) vom Schlauch (5) gelöst sind.

6. Entnahmesystem (1) nach einem der Ansprüche 4 oder 5, **dadurch gekennzeichnet, dass** in dem Führungskanal (14) in Umfangsrichtung äquidistant angeordnete, in radialer Richtung verlaufende Bohrungen (20) vorgesehen sind, wobei in jeder Bohrung (20) eine Kugel (19) geführt ist.

7. Entnahmesystem (1) nach Anspruch 6, **dadurch gekennzeichnet, dass** jede Bohrung (20) an ihrer Ausmündung in den Führungskanal (14) auf einen Durchmesser, der kleiner als der Durchmesser der im Führungskanal (14) geführten Kugeln (19) ist, verengt ist.

8. Entnahmesystem (1) nach einem der Ansprüche 4 - 7, **dadurch gekennzeichnet, dass** die Bohrungen (20) und Kugeln (19) jeweils identisch ausgebildet sind und in einer senkrecht zur Längsachse des Führungskanals (14) verlaufenden Ebene orientiert sind.

9. Entnahmesystem (1) nach einem der Ansprüche 4 - 8, **dadurch gekennzeichnet, dass** der Führungskanal (14) relativ zum Verschlussmittel (8) bewegbar ist.

10. Entnahmesystem (1) nach einem der Ansprüche 4 - 9, **dadurch gekennzeichnet, dass** der Führungskanal (14) Bestandteil eines gegenüber dem Verschlussmittel (8) beweglichen Kopfteils (10) ist.

11. Entnahmesystem (1) nach einem der Ansprüche 9 oder 10, **dadurch gekennzeichnet, dass** in einer Sperrstellung des Verschlussmittels (8) relativ zum Führungskanal (14) Stellmittel am Verschlussmittel (8) die Verriegelungsmittel in den Bohrungen (20) gegen den Schlauch (5) drücken und diesen im Führungskanal (14) fixieren.

12. Entnahmesystem (1) nach Anspruch 11, **dadurch gekennzeichnet, dass** in einer Freigabestellung des Verschlussmittels (8) relativ zum Führungskanal (14) die Stellmittel außer Eingriff mit den Verriegelungsmitteln sind, sodass der Schlauch (5) aus dem Führungskanal (14) gelöst ist.

13. Entnahmesystem (1) nach einem der Ansprüche 1 - 12, **dadurch gekennzeichnet, dass** der Betätigungsmechanismus ein Federmechanismus ist.

14. Entnahmesystem (1) nach Anspruch 13, **dadurch gekennzeichnet, dass** das Kopfteil (10) durch die Federkraft einer Feder (16) in der Freigabestellung relativ zum Verschlussmittel (8) gehalten ist.

15. Entnahmesystem (1) nach Anspruch 14, **dadurch gekennzeichnet, dass** das Überführen in die Sperrstellung durch Andrücken des Kopfteils (10) auf das Verschlussmittel (8) gegen die Federkraft der Feder (16) erfolgt.

16. Entnahmesystem (1) nach einem der Ansprüche 1 - 12, **dadurch gekennzeichnet, dass** das Verschlussmittel (8) den Betätigungsmechanismus ausbildet.

17. Entnahmesystem (1) nach einem der Ansprüche 1 - 16, **dadurch gekennzeichnet, dass** das Verschlussmittel (8) in Form eines Schraubverschlusses ausgebildet ist.

18. Entnahmesystem (1) nach Anspruch 17, **dadurch gekennzeichnet, dass** durch eine Aufwärtsbewegung des Schraubverschlusses die Kugeln (19) freigegeben sind.

## Claims

1. Retrieval system (1) with a retrieval head (2) placeable on an opening of a bottle (3), wherein the retrieval head (2) comprises closure means for closing the opening of the bottle (3), wherein a hose (5) is so mounted in the retrieval head (2) that when the retrieval head (2) is placed on the opening the hose (5) protrudes into the bottle (3) and liquid (4) is removable from the bottle (3) by way of the hose (5), **characterised in that** an actuating mechanism by means of which the mounting of the hose (5) in the retrieval head (2) is releasable is provided.

2. Retrieval system (1) according to claim 1, **characterised in that** the retrieval head (2) comprises locking means which in a locking position fix the hose (5) in the retrieval head (2).

3. Retrieval system (1) according to claim 2, **characterised in that** the locking means is transferrable by way of the actuating mechanism to a release position in which these means free the hose (5).

4. Retrieval system (1) according to claim 3, **characterised in that** the locking means are formed by balls (19) which are displaceably mounted in bores (20) of a guide channel (14), wherein the hose (5) is guidable in the guide channel (14).

5. Retrieval system (1) according to claim 4, **characterised in that** in the locking position the balls (19) are pressed against the hose (5) by a pressing force, whereby the hose (5) is fixed in position, and that in the release position the balls (19) are released from the hose (5).

6. Retrieval system (1) according to one of claims 4 and 5, **characterised in that** bores (20) equidistantly arranged in circumferential direction and extending in radial direction are provided in the guide channel (14), wherein a ball (19) is guided in each bore (20).

7. Retrieval system (1) according to claim 6, **characterised in that** each bore (20) is narrowed at its opening into the guide channel (14) to a diameter which is smaller than the diameter of the balls (19) guided in the guide channel (14).

8. Retrieval system (1) according to any one of claims 4 to 7, **characterised in that** the bores (20) and balls (19) are respectively of identical construction and are oriented in a plane extending perpendicularly to the longitudinal axis of the guide channel (14).

9. Retrieval system (1) according to any one of claims 4 to 8, **characterised in that** the guide channel (14) is movable relative to the closure means (8).

10. Retrieval system (1) according to any one of claims 4 to 9, **characterised in that** the guide channel (14) is a component of a head part (10) movable relative to the closure means (8).

11. Retrieval system (1) according to one of claims 9 and 10, **characterised in that** in a blocking setting of the closure means (8) relative to the guide channel (14) setting means at the closure means (8) press the locking means in the bores (20) against the hose (5) and fix this in the guide channel (14).

12. Retrieval system (1) according to claim 11, **characterised in that** in a release setting of the closure means (8) relative to the guide channel (14) the setting means are out of engagement with the locking means so that the hose (5) is released from the guide channel (14).

13. Retrieval system (1) according to any one of claims 1 to 12, **characterised in that** the actuating mechanism is a spring mechanism.

14. Retrieval system (1) according to claim 13, **characterised in that** the head part (10) is held by the spring force of a spring (16) in the release setting relative to the closure means (8).

15. Retrieval system (1) according to claim 14, **characterised in that** the transfer to the blocking setting takes place by pressing the head part (10) onto the closure means (8) against the spring force of the spring (16).

16. Retrieval system (1) according to any one of claims 1 to 12, **characterised in that** the closure means (8) forms the actuating mechanism.

17. Retrieval system (1) according to any one of claims 1 to 16, **characterised in that** the closure means (8) is constructed in the form of a screw closure.

18. Retrieval system (1) according to claim 17, **characterised in that** the balls (19) are freed by an upward movement of the screw closure.

## Revendications

1. Système de prélèvement (1) muni d'une tête de prélèvement (2) pouvant être placée sur une ouverture d'un flacon (3), la tête de prélèvement (2) comprenant un moyen de fermeture pour la fermeture de l'ouverture du flacon (3), un tuyau (5) étant monté dans la tête de prélèvement (2) de telle sorte que, lorsque la tête de prélèvement (2) est placée sur l'ouverture, le tuyau (5) fait saillie dans le flacon (3) et du liquide (4) peut être prélevé hors du flacon (3) par l'intermédiaire du tuyau (5), **caractérisé en ce qu'**un mécanisme d'actionnement est prévu, au moyen duquel le montage du tuyau (5) dans la tête de prélèvement (2) peut être détaché.

2. Système de prélèvement (1) selon la revendication 1, **caractérisé en ce que** la tête de prélèvement (2) comprend des moyens de verrouillage, qui fixent le tuyau (5) dans la tête de prélèvement (2) dans une position de verrouillage.

3. Système de prélèvement (1) selon la revendication 2, **caractérisé en ce qu'**au moyen du mécanisme d'actionnement, les moyens de verrouillage peuvent être transférés dans une position de détachement, dans laquelle ceux-ci libèrent le tuyau (5).

4. Système de prélèvement (1) selon la revendication 3, **caractérisé en ce que** les moyens de verrouillage sont formés par des billes (19), qui sont montées de manière coulissante dans des alésages (20) d'un canal de guidage (14), le tuyau (5) pouvant être guidé dans le canal de guidage (14).

5. Système de prélèvement (1) selon la revendication 4, **caractérisé en ce que**, dans la position de verrouillage, les billes (19) sont pressées avec une force de pression contre le tuyau (5), le tuyau (5) étant ainsi fixé en place, et **en ce que**, dans la position de détachement, les billes (19) sont détachées du tuyau (5).

6. Système de prélèvement (1) selon l'une quelconque des revendications 4 ou 5, **caractérisé en ce que** des alésages (20) s'étendant dans la direction radiale, agencés de manière équidistante dans la direction périphérique, sont prévus dans le canal de guidage (14), une bille (19) étant guidée dans chaque alésage (20).

7. Système de prélèvement (1) selon la revendication 6, **caractérisé en ce que** chaque alésage (20) est rétréci au niveau de son embouchure dans le canal de guidage (14) à un diamètre, qui est inférieur au diamètre des billes (19) guidées dans le canal de guidage (14).

8. Système de prélèvement (1) selon l'une quelconque des revendications 4 à 7, **caractérisé en ce que** les alésages (20) et les billes (19) sont à chaque fois configurés de manière identique et sont orientés dans un plan s'étendant perpendiculairement à l'axe longitudinal du canal de guidage (14).

9. Système de prélèvement (1) selon l'une quelconque des revendications 4 à 8, **caractérisé en ce que** le canal de guidage (14) peut être déplacé par rapport au moyen de fermeture (8).

10. Système de prélèvement (1) selon l'une quelconque des revendications 4 à 9, **caractérisé en ce que** le canal de guidage (14) est un constituant d'une partie de tête (10) mobile par rapport au moyen de fermeture (8).

11. Système de prélèvement (1) selon l'une quelconque des revendications 9 ou 10, **caractérisé en ce que**, dans une position de blocage du moyen de fermeture (8) par rapport au canal de guidage (14), des moyens de réglage sur le moyen de fermeture (8) pressent les moyens de verrouillage dans les alésages (20) contre le tuyau (5) et fixent celui-ci dans le canal de guidage (14).

12. Système de prélèvement (1) selon la revendication 11, **caractérisé en ce que**, dans une position de libération du moyen de fermeture (8) par rapport au canal de guidage (14), les moyens de réglage sont désengagés des moyens de verrouillage, de telle sorte que le tuyau (5) est détaché du canal de guidage (14).

13. Système de prélèvement (1) selon l'une quelconque des revendications 1 à 12, **caractérisé en ce que** le mécanisme d'actionnement est un mécanisme à ressort.

14. Système de prélèvement (1) selon la revendication 13, **caractérisé en ce que** la partie de tête (10) est maintenue dans la position de libération par rapport au moyen de fermeture (8) par la force de ressort d'un ressort (16).

15. Système de prélèvement (1) selon la revendication 14, **caractérisé en ce que** le transfert dans la position de blocage a lieu par pression de la partie de tête (10) sur le moyen de fermeture (8) contre la force de ressort du ressort (16).

16. Système de prélèvement (1) selon l'une quelconque des revendications 1 à 12, **caractérisé en ce que** le moyen de fermeture (8) forme le mécanisme d'actionnement.

17. Système de prélèvement (1) selon l'une quelconque des revendications 1 à 16, **caractérisé en ce que** le moyen de fermeture (8) est configuré sous la forme d'une fermeture à vis.

18. Système de prélèvement (1) selon la revendication 17, **caractérisé en ce que** les billes (19) sont libérées par un mouvement vers le haut de la fermeture à vis.
